# EUROPEAN PATENT SPECIFICATION

(11) **EP 4 372 261 B1**
(45) Date of publication and mention of the grant of the patent: **11.02.2026**
(21) Application number: 22826787.8
(22) Date of filing: 11.10.2022
(51) Int. Cl.: F16L 37/084, F16J 15/06, F16L 37/098, F16L 37/133

(54) **PIPE FITTING CONNECTOR**
ROHRVERBINDUNGSVERBINDER
CONNECTEUR DE RACCORD DE TUYAU

(30) Priority: 27.09.2022 CN 202222564182 U
(43) Date of publication of application: 22.05.2024
(73) Proprietor: Wuxi Jinhua Yiyuan Technology Co., Ltd, Wuxi, Jiangsu 214000 (CN)
(72) Inventor: GU, Niandong, Wuxi, Jiangsu 214000 (CN); LU, Xiaojia, Wuxi, Jiangsu 214000 (CN)
(74) Representative: Cleanthous, Marinos
(86) International application number: PCT/CN2022/124645
(87) International publication number: WO 2024/065875

(56) References cited:
- EP-A1- 1 380 791
- EP-A1- 1 380 791
- CN-A- 1 208 830
- CN-A- 101 586 725
- CN-A- 101 699 122
- GB-A- 1 145 896
- US-A- 5 228 724
- US-A- 5 718 463
- US-A1- 2019 024 834

## Description

### TECHNICAL FIELD

The present disclosure relates to the technical field of pipe fittings, and specifically relates to a pipe fitting connector.

### BACKGROUND

A pipe fitting connector is a device used to realize quick connection and quick disconnection between pipe fittings, and has been widely used in various industries. For example, the pipe fitting connector is generally applied to washing machines, refrigerators and the like in the household appliance industry. It can hermetically connect two sections of a pipe fitting to make water flow. The pipe fitting connector is also used in other fields. For example, different sets of equipment usually need to be connected in the medical industry to communicate two sets of equipment to introduce air or feed liquid. However, it is difficult to unify the sizes of various equipment pipe fittings, so a pipe fitting connector is often required.

The existing pipe fitting connector generally realizes connection by fasteners and is sealed by means of rubber or silica gel, so that the existing pipe fitting connector features with good sealing performance and quick connection and disconnection. However, it also has defects: The rubber or silica gel seals inner and outer surfaces of pipe fittings at both ends by its own elasticity and locks the pipe fittings through fastener structures. However, the fastener structures of the existing pipe fitting connector can hardly achieve a long-lasting sealing effect. That is, the pipe fitting connector needs to be replaced frequently, which leads to an increase in the use cost. Therefore, breaking through the sealing persistence of the pipe fitting connector is a subject that needs to be emphatically studied in the field.

Based on the above defects, the present disclosure discloses a pipe fitting connector, which is used for solving the defects in the prior art.

US2019024834A1 discloses a tube quick-release assembly, which includes an outer socket and an inner plug. The inner plug is movably inserted in the outer socket. An upper portion of the outer socket is formed with two opposing engaging openings. An engaging buckle is fitted on the inner plug. The engaging buckle is provided with two opposing engaging legs having hooks and flaring outward. The hooks of the engaging buckle radially engage with the two engaging openings of the outer socket to realize a quick connection of tubes. The two hooks of the engaging buckle can be pressed inward to realize a quick disconnection of tubes.

GB1145896 (A) discloses a coupling member 2, which has an encircling collar 18 through which apertures 10 extend for receiving, on a member 1, axially-extending arms 6 which, when the members are mated, are deflected resiliently inwardly to enter the apertures and subsequently: return to the initial position thereof so that shoulders 8 on the arms latch behind shoulders 21 of the apertures. A resilient buffer ring 16 is compressed to urge the shoulders together to retain the members in engagement. The members may be of synthetic plastics material, and there may be a sealing ring 9 to promote fluid-tightness of the coupling. Members 1 or members 2 may be formed integrally to provide T or elbow junctions, and four members may extend radially from a common junction to be connected and supported by an integral, rectangular frame.

US5228724 (A) discloses an assembly device of a hose connection in which a tubular joint is connected to the hose connection and is capable of cooperating with an inlet and outlet nipple of the water box of the heat exchanger, the tightness being ensured by a seal of an elastomer material and the maintenance in the assembled condition of the joint and the nipple being ensured by a bracket (14 and 15), the component carrying the bracket being fitted with a ring (12) with a conical outer surface, axially mobile in the unassembled condition.

### SUMMARY

The present disclosure aims to provide a pipe fitting connector to solve the problems mentioned in the background section.

In order to solve the above technical problems, the invention is a pipe fitting connector according to the technical features of claim 1. Advantageous embodiments of the invention are defined in the dependent claims. A pipe fitting connector, according to the invention, includes a first connection member and a second connection member. The first connection member includes a first columnar pipe fitting, and a sealing member arranged on an outer wall of the first connection member; the second connection member includes a second columnar pipe fitting and a locking piece; the first columnar pipe fitting extends into the second columnar pipe fitting; the sealing member is located between an outer wall of the first columnar pipe fitting and an inner wall of the second columnar pipe fitting to seal the first columnar pipe fitting to the second columnar pipe fitting; the locking piece is connected to the first connection member; the locking piece includes elastic arms and hooks; when the first connection member is sealed to the second connection member, the elastic arms extend into locking through holes formed in the second connection member to generate a pre-tightening force on inner walls of the locking through holes; and the hooks are simultaneously hooked to end faces of the locking through holes to lock the first connection member to the second connection member.

The locking piece includes an annular member sleeving the first connection member; the first connection member includes a first retainer and second retainers; the annular member is located between the first retainer and the second retainers, and is spaced apart from the first retainer and the second retainers by axial spaces.

The first retainer is an annular bulge integrated with the first connection member; and the second retainers are several curved bulges arranged in a circumferential direction of the first connection member and integrated with the first connection member.

Preferably, two or more elastic arms are provided; the annular member, the elastic arms and the hooks are integrally formed, and the elastic arms and the annular member form a trapezoid structure.

Preferably, one side of each elastic arm away from the first columnar pipe fitting is provided with antiskid lines.

Preferably, the second connection member includes two or more wall pieces; the wall pieces are located outside the second columnar pipe fitting, and the locking through holes are formed between the wall pieces and an outer wall of the second columnar pipe fitting; and a wall thickness of one side of each wall piece close to the first connection member is greater than a wall thickness of one side away from the first connection member.

Preferably, one end of the second columnar pipe fitting close to the first columnar pipe fitting is provided with an annular chamfer; one end of the annular chamfer extends to be connected to an end face of the second columnar pipe fitting, and the other end extends to be connected to the inner wall of the second columnar pipe fitting.

Preferably, the first connection member includes ring slots; the ring slots are formed on the outer wall of the first columnar pipe fitting; and the sealing member is arranged in the ring slots.

Preferably, the first connection member further includes an edge slot; the edge slot is formed in an outer edge of an end portion of the first columnar pipe fitting; the second connection member further includes a flange; the flange is located in the middle of the inner wall of the second columnar pipe fitting; and the flange and the edge slot match each other when the first columnar pipe fitting is placed in the second columnar pipe fitting.

Compared with the prior art, the present disclosure achieves the following beneficial effects:

First, the pre-tightening force generated by deformation of the elastic arms of the pipe fitting connector disclosed by the present disclosure will continuously generate a pre-tightening action on the inner walls of the locking through holes on the second connection member, so that a long-lasting sealing effect is guaranteed between the first connection member and the second connection member, and the defect that it is hard for the traditional connector to constantly keep the sealing performance.

Second, according to the pipe fitting connector disclosed by the present disclosure, axial movement and circumferential rotation cannot occur between the first connection member and the second connection member because of the hooks, which further achieves locking between the first connection member and the second connection member, improves the anti-separation force and prevents the locking piece from falling off.

Then, according to the pipe fitting connector disclosed by the present disclosure, when the hooks are hooked to the locking through holes, the annular member will slightly axially move relative to the first connection member, so that the annular member abuts against the end face of the first retainer. By means of the action of transfer forces of the elastic arms, the hooking action of the hooks to the end faces of the locking through holes is completed. In this way, the matching precision for the hooks and the locking through holes can be reduced, which facilitates the production; and the locking piece is hard to break due to the elasticity.

Finally, according to the pipe fitting connector disclosed by the present disclosure, the annular chamfer can facilitate the sealing member to enter and leave the second columnar pipe fitting.

### BRIEF DESCRIPTION OF THE DRAWINGS

The accompanying drawings are used to provide a further understanding of the present disclosure and constitute a part of this specification to explain the present disclosure together with the embodiments of the present disclosure, and do not constitute restrictions to the present disclosure. In the drawings:
FIG. 1 is a schematic three-dimensional diagram of a pipe fitting connector in an embodiment of the present disclosure;
FIG. 2 is an exploded diagram of a pipe fitting connector in an embodiment of the present disclosure;
FIG. 3 is a sectional view of an unconnected pipe fitting connector in an embodiment of the present disclosure; and
FIG. 4 is a three-dimensional diagram of a second connection member in an embodiment of the present disclosure.

In the drawings:
first connection member 1, first columnar pipe fitting 11, first retainer 12, second retainer 13, ring slot 14, and edge slot 15;
sealing member 2;
second connection member 3, second columnar pipe fitting 31, locking through hole 32, wall piece 33, annular chamfer 34, and flange 35;
locking piece 4, elastic arm 41, hook 42, annular member 43, and antiskid line 44.

### DETAILED DESCRIPTION OF THE EMBODIMENTS

The technical solutions in the embodiments of the present disclosure will be described clearly and completely below with reference to the drawings in the embodiments of the present disclosure. Obviously, the embodiments described herein are only part of the embodiments of the present disclosure, not all the embodiments. Based on the embodiments in the present disclosure, all other embodiments obtained by those of ordinary skill in the art without creative work shall fall within the protection scope of the present disclosure.

The existing pipe fitting connector generally realizes connection by fasteners and is sealed by means of rubber or silica gel, so that the existing pipe fitting connector features with good sealing performance and quick connection and disconnection. However, it also has defects: The rubber or silica gel seals inner and outer surfaces of pipe fittings at both ends by its own elasticity and locks the pipe fittings through fastener structures. However, the fastener structures of the existing pipe fitting connector can hardly achieve a long-lasting sealing effect. That is, the pipe fitting connector needs to be replaced frequently, which leads to an increase in the use cost.

Based on the above defects, the present disclosure provides an embodiment of a pipe fitting connector as an optimal implementation of the pipe fitting connector to solve the problems in the prior art.

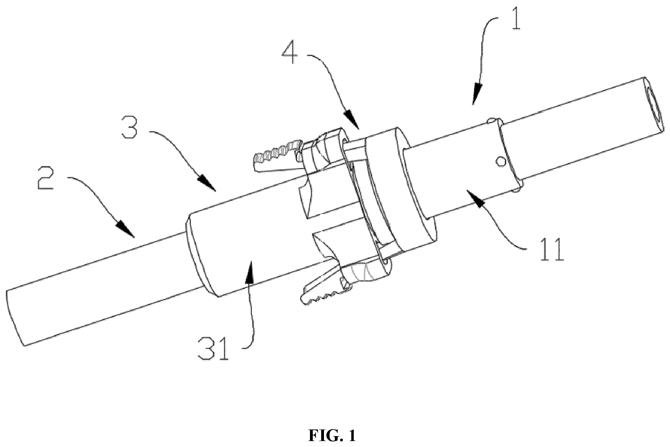

Specifically, as shown in FIG. 1 to FIG. 2, the pipe fitting connector includes a first connection member 1. The first connection member 1 includes a first columnar pipe fitting 11 used for transporting fluid, and further includes a sealing member 2. The sealing member 2 is arranged on an outer wall of the first connection member 1, and is preferably an annular rubber ring sleeving the first connection member 1 to achieve a sealing effect. The pipe fitting connector further includes a second connection member 3. The second connection member 3 includes a second columnar pipe fitting 31 used for being hermetically connected to the first connection member 1. Hermetical connection between a first pipe fitting and a second pipe fitting can be achieved when the first columnar pipe fitting 11 and the second columnar pipe fitting 31 are hermetically connected to each other.

Specifically, a connection way for the first columnar pipe fitting 11 and the second columnar pipe fitting 31 is as follows: As shown in FIG. 1 to FIG. 2, the first columnar pipe fitting 11 extends into the second columnar pipe fitting 31, so that the sealing member 2 is located between an outer wall of the first columnar pipe fitting 11 and an inner wall of the second columnar pipe fitting 31 to seal the first connection member 1 to the second connection member 3, thus achieving the hermetical connection between the first pipe fitting and the second pipe fitting.

Further, long-lasting connection between the first connection member and the second connection member cannot be achieved until a locking force is provided for the connection between the first columnar pipe fitting 11 and the second columnar pipe fitting 31. Based on this, as shown in FIG. 1 to FIG. 2, this connector further includes a locking piece 4. The locking piece 4 is connected to the first connection member 1. The locking piece 4 includes elastic arms 41 and hooks 42. When the first connection member 1 and the second connection member 3 are hermetically connected, the elastic arms 41 extend into locking through holes 32 formed in the second connection member 3 to generate a pre-tightening force on inner walls of the locking through holes 32. The hooks 42 are hooked to end faces of the locking through holes 32 to lock the first connection member 1 to the second connection member 3. The pre-tightening force generated by the elastic arms 41 on the inner walls of the locking through holes 32 will lock the connection between the first connection member 1 and the second connection member 3 to prevent the looseness between them. Meanwhile, the pre-tightening force generated by the deformation of the elastic arms 41 will continuously act on the inner walls of the locking through holes 32, so as to guarantee a long-lasting sealing effect between the first connection member 1 and the second connection member 3, which overcomes the defects of the traditional connector. In addition, axial movement and circumferential rotation cannot occur between the first connection member 1 and the second connection member 3 because of the hooks 42, which further achieves locking between the first connection member and the second connection member, improves the anti-separation force and prevents the locking piece 4 from falling off.

Further, in another embodiment of the connector, a connection way for the locking piece 4 and the first connection member 1 is specifically as follows: As shown in FIG. 1 to FIG. 2, the locking piece 4 includes an annular member 43 sleeving the first connection member 1. The first connection member 1 includes a first retainer 12 and second retainers 13. The annular member 43 is located between the first retainer 12 and the second retainers 13, and is spaced apart from the first retainer 12 and the second retainers 13 by axial spaces. Due to the spaces, there is a certain loosening degree between the locking piece 4 and the first connection member 1. When the hooks 42 are hooked to locking through holes, the annular member 43 will slightly axially move relative to the first connection member 1, so that the annular member 43 abuts against the end face of the first retainer 12. By means of the action of transfer forces of the elastic arms 41, the hooking action of the hooks 42 to the end faces of the locking through holes 32 is completed. In this way, the matching precision for the hooks 42 and the locking through holes can be reduced, which facilitates the production; and the locking piece 4 is hard to break due to the elasticity.

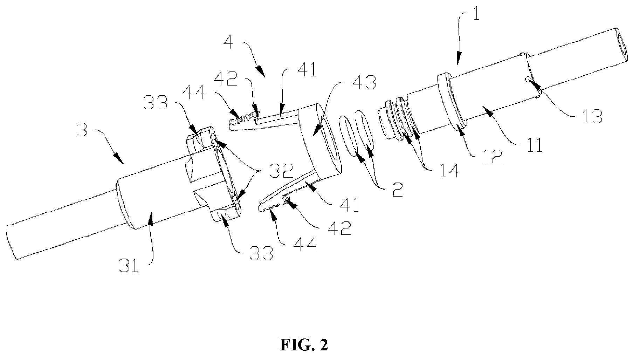

Further, as shown in FIG. 2, in order to facilitate the assembling of the locking piece 4, in another embodiment of the connector, the first retainer 12 is an annular bulge integrated with the first connection member 1. The second retainers 13 are several curved bulges arranged in a circumferential direction of the first connection member 1 and integrated with the first connection member 1. The curved bulges facilitate the assembling between the locking piece 4 and the first connection member 1. After the first pipe fitting is fixedly connected to the first connection member 1, the locking piece 4 can sleeve the first pipe fitting from the other end of the first pipe fitting. The annular member 43 can across the curved bulges under the condition of applying an acting force and is placed between the first retainer 12 and the second retainers 13. The curved shapes of the curved bulges are convenient for the annular member 43 to across.

Further, as shown in FIG. 2, in another embodiment of the connector, in order to provide a multidirectional and uniform pre-tightening force to the second connection member 3, there are two or more elastic arms 41. In this embodiment, there are preferably two elastic arms 41. Correspondingly, there are also two locking through holes 32. The annular member 43, the elastic arms 41 and the hooks 42 are integrally formed and are prepared from plastic, so that the elastic arms 41 can deform to generate an elastic force.

Further, as shown in FIG. 2, in another embodiment of the connector, the elastic arms 41 and the annular member 43 form a trapezoid structure. In this way, in a free state, the elastic arms 41 cannot directly correspond to the locking through holes 32. When entering the locking through holes 32, the elastic arms 41 deform under the action of the inner walls of the locking through holes 32, and then generate the pre-tightening force. In this embodiment, a field angle of the trapezoid structure is 10°.

Further, as shown in FIG. 2, in another embodiment of the connector, one side of each elastic arm 41 away from the first columnar pipe fitting 11 is provided with antiskid lines 44. The antiskid lines 44 are specifically composed of several antiskid slots for facilitating manual handling.

Further, as shown in FIG. 2, in another embodiment of the connector, the locking through holes 32 are specifically as follows: The second connection member 3 includes two or more wall pieces 33. The wall pieces 33 are located outside the second columnar pipe fitting 31, and the locking through holes 32 are formed between the wall pieces and an outer wall of the second columnar pipe fitting 31. A wall thickness of one side of each wall piece 33 close to the first connection member 1 is greater than a wall thickness of one side away from the first connection member 1. In this way, the resistance of the locking through holes 32 to the hooks 42 is increased, and deformation of the wall pieces 33 is prevented.

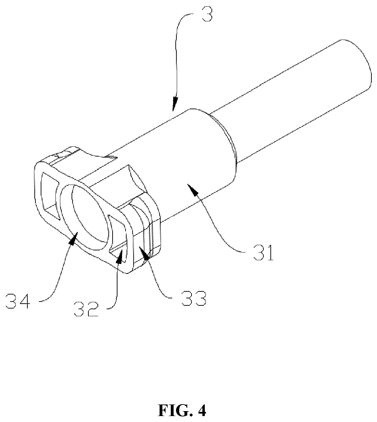

Further, as shown in FIG. 4, in another embodiment of the connector, one end of the second columnar pipe fitting 31 close to the first columnar pipe fitting 11 is provided with an annular chamfer 34. One end of the annular chamfer 34 extends to be connected to an end face of the second columnar pipe fitting 31, and the other end extends to be connected to the inner wall of the second columnar pipe fitting 31. The annular chamber 34 can facilitate the sealing member 2 to enter and leave the second columnar pipe fitting 31.

Further, as shown in FIG. 2, in order to prevent the sealing member 2 from falling off in the assembling process, in another embodiment of the connector, the first connection member 1 includes ring slots 14. The ring slots 14 are formed on the outer wall of the first columnar pipe fitting 11. The sealing member 2 is arranged in the ring slots 14.

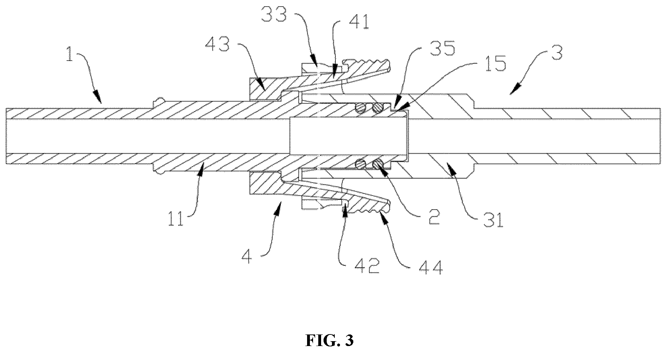

Further, in another embodiment of the connector, in order to prevent the first connection member 1 and the second connection member 3 from axially moving after the hermetical connection, as shown in FIG. 3, the first connection member 1 further includes an edge slot 15. The edge slot 15 is formed in an outer edge of an end portion of the first columnar pipe fitting 11. The second connection member 3 further includes a flange 35. The flange 35 is located in the middle of the inner wall of the second columnar pipe fitting 31. The flange 35 and the edge slot 15 match each other when the first columnar pipe fitting 11 is placed in the second columnar pipe fitting 31, which can guarantee axial fixing between the first connection member 1 and the second connection member 3.

## Claims

1. A pipe fitting connector, comprising:
a first connection member (1), wherein the first connection member (1) comprises a first columnar pipe fitting (11);
and a sealing member (2), wherein the sealing member (2) is arranged on an outer wall of the first connection member (1);
and a second connection member (3), wherein the second connection member (3) comprises a second columnar pipe fitting (31); the first columnar pipe fitting (11) extends into the second columnar pipe fitting (31); the sealing member (2) is located between an outer wall of the first columnar pipe fitting (11) and an inner wall of the second columnar pipe fitting (31) to seal the first connection member (1) to the second connection member (3);
and a locking piece (4), wherein the locking piece (4) is connected to the first connection member (1); the locking piece (4) comprises elastic arms (41) and hooks (42); when the first connection member (1) and the second connection member (3) are sealed, the elastic arms (41) extend into locking through holes (32) formed in the second connection member (3) to generate a pre-tightening force on inner walls of the locking through holes (32); and the hooks (42) are simultaneously hooked to end faces of the locking through holes (32) to lock the first connection member (1) to the second connection member (3);wherein
the locking piece (4) comprises an annular member (43) sleeving the first connection member (1);
the first connection member (1) comprises a first retainer (12) and second retainers (13); the annular member (43) is located between the first retainer (12) and the second retainers (13), and is spaced apart from the first retainer (12) and the second retainers (13) by axial spaces;
wherein
the first retainer (12) is an annular bulge integrated with the first connection member (1);
the second retainers (13) are several curved bulges arranged in a circumferential direction of the first connection member (1) and integrated with the first connection member (1).

2. The pipe fitting connector according to claim 1, wherein two or more elastic arms (41) are provided; the annular member (43), the elastic arms (41) and the hooks (42) are integrally formed, and the elastic arms (41) and the annular member (43) form a trapezoid structure.

3. The pipe fitting connector according to any one of claims 1 to 2, wherein one side of each elastic arm (41) away from the first columnar pipe fitting (11) is provided with antiskid lines (44).

4. The pipe fitting connector according to any one of claims 1 to 2, wherein
the second connection member (3) comprises two or more wall pieces (33); the wall pieces (33) are located outside the second columnar pipe fitting (31), and the locking through holes (32) are formed between the wall pieces and an outer wall of the second columnar pipe fitting (31); and a wall thickness of one side of each wall piece (33) close to the first connection member (1) is greater than a wall thickness of one side away from the first connection member (1).

5. The pipe fitting connector according to any one of claims 1 to 2, wherein one end of the second columnar pipe fitting (31) close to the first columnar pipe fitting (11) is provided with an annular chamfer (34); one end of the annular chamfer (34) extends to be connected to an end face of the second columnar pipe fitting (31), and the other end extends to be connected to the inner wall of the second columnar pipe fitting (31).

6. The pipe fitting connector according to any one of claims 1 to 2, wherein the first connection member (1) comprises ring slots (14); the ring slots (14) are formed on the outer wall of the first columnar pipe fitting (11); and the sealing member (2) is arranged in the ring slots (14).

7. The pipe fitting connector according to any one of claims 1 to 2, wherein
the first connection member (1) further comprises an edge slot (15); the edge slot (15) is formed in an outer edge of an end portion of the first columnar pipe fitting (11);
the second connection member (3) further comprises a flange (35); the flange (35) is located in the middle of the inner wall of the second columnar pipe fitting (31); and
the flange (35) and the edge slot (15) match each other when the first columnar pipe fitting (11) is placed in the second columnar pipe fitting (31).

## Patentansprüche

1. Rohrverbindungsstück, umfassend:
ein erstes Verbindungselement (1), wobei das erste Verbindungselement (1) ein erstes säulenförmiges Rohrteil (11) umfasst;
ein Dichtelement (2), wobei das Dichtelement (2) an einer Außenwand des ersten Verbindungselements (1) angeordnet ist;
ein zweites Verbindungselement (3), wobei das zweite Verbindungselement (3) ein zweites säulenförmiges Rohrteil (31) umfasst; wobei sich das erste säulenförmige Rohrteil (11) in das zweite säulenförmige Rohrteil (31) erstreckt; wobei sich das Dichtelement (2) zwischen einer Außenwand des ersten säulenförmigen Rohrteils (11) und einer Innenwand des zweiten säulenförmigen Rohrteils (31) befindet, um das erste Verbindungselement (1) mit dem zweiten Verbindungselement (3) abzudichten; und
ein Verriegelungsteil (4), wobei das Verriegelungsteil (4) mit dem ersten Verbindungselement (1) verbunden ist; wobei das Verriegelungsteil (4) elastische Arme (41) und Haken (42) umfasst; wobei, wenn das erste Verbindungselement (1) und das zweite Verbindungselement (3) abgedichtet sind, sich die elastischen Arme (41) in Verriegelungsdurchgangslöcher (32) erstrecken, die im zweiten Verbindungselement (3) ausgebildet sind, um eine Vorspannkraft auf Innenwände der Verriegelungsdurchgangslöcher (32) zu erzeugen; und
wobei die Haken (42) gleichzeitig an Endflächen der Verriegelungsdurchgangslöcher (32) eingehakt sind, um das erste Verbindungselement (1) mit dem zweiten Verbindungselement (3) zu verriegeln;
wobei das Verriegelungsteil (4) ein ringförmiges Element (43) umfasst, das auf das erste Verbindungselement (1) aufgesteckt wird;
wobei das erste Verbindungselement (1) eine erste Halterung (12) und zweite Halterungen (13) umfasst;
wobei das ringförmige Element (43) zwischen der ersten Halterung (12) und den zweiten Halterungen (13) angeordnet ist und von der ersten Halterung (12) und den zweiten Halterungen (13) durch axiale Abstände beabstandet ist;
wobei die erste Halterung (12) eine ringförmige Auswölbung ist, die mit dem ersten Verbindungselement (1) integriert ist;
wobei die zweiten Halterungen (13) mehrere in Umfangsrichtung des ersten Verbindungselements (1) angeordnete gewölbte Wülste sind und mit dem ersten Verbindungselement (1) integriert.

2. Rohrverbindungsstück nach Anspruch 1, wobei zwei oder mehr elastische Arme (41) vorgesehen sind; wobei das ringförmige Element (43), die elastischen Arme (41) und die Haken (42) einstückig ausgebildet sind, und wobei die elastischen Arme (41) und das ringförmige Element (43) eine Trapezstruktur bilden.

3. Rohrverbindungsstück nach einem der Ansprüche 1 bis 2, wobei eine Seite jedes elastischen Arms (41), die vom ersten säulenförmigen Rohrteil (11) abgewandt ist, mit Gleitschutzlinien (44) versehen ist.

4. Rohrverbindungsstück nach einem der Ansprüche 1 bis 2, wobei das zweite Verbindungselement (3) zwei oder mehr Wandstücke (33) umfasst; wobei sich die Wandstücke (33) außerhalb des zweiten zylindrischen Rohrteils (31) befinden, und wobei die Verriegelungsdurchgangslöcher (32) zwischen den Wandstücken und einer Außenwand des zweiten zylindrischen Rohrteils (31) ausgebildet sind; und eine Wanddicke einer Seite jedes Wandstücks (33) in der Nähe des ersten Verbindungselements (1) größer ist als eine Wanddicke einer Seite, die vom ersten Verbindungselement (1) entfernt ist.

5. Rohrverbindungsstück nach einem der Ansprüche 1 bis 2, wobei ein Ende des zweiten säulenförmigen Rohrteils (31) in der Nähe des ersten säulenförmigen Rohrteils (11) mit einer ringförmigen Fase (34) versehen ist; wobei ein Ende der ringförmigen Fase (34) erstreckt sich, um mit einer Endfläche des zweiten säulenförmigen Rohrteils (31) verbunden zu sein, und das andere Ende der ringförmigen Fase erstreckt sich, um mit der Innenwand des zweiten säulenförmigen Rohrteils (31) verbunden zu sein.

6. Rohrverbindungsstück nach einem der Ansprüche 1 bis 2, wobei das erste Verbindungselement (1) Ringnuten (14) aufweist; wobei die Ringnuten (14) an der Außenwand des ersten säulenförmigen Rohrteils (11) ausgebildet sind; und wobei das Dichtelement (2) in den Ringnuten (14) angeordnet ist.

7. Rohrverbindungsstück nach einem der Ansprüche 1 bis 2, wobei
das erste Verbindungselement (1) ferner eine Randnut (15) umfasst; wobei die Randnut (15) in einer Außenkante eines Endabschnitts des ersten säulenförmigen Rohrteils (11) ausgebildet ist;
das zweite Verbindungselement (3) ferner einen Flansch (35) umfasst; wobei sich der Flansch (35) in der Mitte der Innenwand des zweiten zylindrischen Rohrteils (31) befindet; und
die Flansch (35) und die Randnut (15) zueinander passen, wenn das erste säulenförmige Rohrteil (11) in das zweite säulenförmige Rohrteil (31) eingesetzt wird.

## Revendications

1. Connecteur de raccord de tuyau, comprenant :
un premier élément de raccordement (1), dans lequel le premier élément de raccordement (1) comprend un premier raccord de tuyau colonnaire (11) ;
et un élément d'étanchéité (2), dans lequel l'élément d'étanchéité (2) est disposé sur une paroi externe du premier élément de raccordement (1) ;
et un second élément de raccordement (3), dans lequel le second élément de raccordement (3) comprend un second raccord de tuyau colonnaire (31) ; le premier raccord de tuyau colonnaire (11) s'étend dans le second raccord de tuyau colonnaire (31) ; l'élément d'étanchéité (2) est situé entre une paroi externe du premier raccord de tuyau colonnaire (11) et une paroi interne du second raccord de tuyau colonnaire (31) pour assurer une étanchéité entre le premier élément de raccordement (1) et le second élément de raccordement (3) ;
et une pièce de verrouillage (4), dans lequel la pièce de verrouillage (4) est reliée au premier élément de raccordement (1) ; la pièce de verrouillage (4) comprend des bras élastiques (41) et des crochets (42) ; lorsque le premier élément de raccordement (1) et le second élément de raccordement (3) sont scellés, les bras élastiques (41) s'étendent dans des trous traversants de verrouillage (32) formés dans le second élément de raccordement (3) afin de générer une force de pré-serrage sur des parois internes des trous traversants de verrouillage (32) ; et les crochets (42) sont simultanément accrochés à des faces d'extrémité des trous traversants de verrouillage (32) afin de verrouiller le premier élément de raccordement (1) au second élément de raccordement (3) ; dans lequel
la pièce de verrouillage (4) comprend un élément annulaire (43) manchonné sur le premier élément de raccordement (1) ;
le premier élément de raccordement (1) comprend un premier dispositif de retenue (12) et des seconds dispositifs de retenue (13) ; l'élément annulaire (43) est situé entre le premier dispositif de retenue (12) et les seconds dispositifs de retenue (13), et est espacé du premier dispositif de retenue (12) et des seconds dispositifs de retenue (13) par des espaces axiaux ;
dans lequel
le premier dispositif de retenue (12) est une bosse annulaire intégrée au premier élément de raccordement (1) ;
les seconds dispositifs de retenue (13) sont plusieurs bosses incurvées disposées dans une direction circonférentielle du premier élément de raccordement (1) et intégrées au premier élément de raccordement (1).

2. Connecteur de raccord de tuyau selon la revendication 1, dans lequel deux ou plusieurs bras élastiques (41) sont prévus ; l'élément annulaire (43), les bras élastiques (41) et les crochets (42) sont formés d'un seul tenant, et les bras élastiques (41) et l'élément annulaire (43) forment une structure trapézoïdale.

3. Connecteur de raccord de tuyau selon l'une quelconque des revendications 1 à 2, dans lequel un côté de chaque bras élastique (41) éloigné du premier raccord de tuyau colonnaire (11) est pourvu de lignes antidérapantes (44).

4. Connecteur de raccord de tuyau selon l'une quelconque des revendications 1 à 2, dans lequel
le second élément de raccordement (3) comprend deux ou plusieurs pièces de paroi (33) ; les pièces de paroi (33) sont situées à l'extérieur du second raccord de tuyau colonnaire (31), et les trous traversants de verrouillage (32) sont formés entre les pièces de paroi et une paroi externe du second raccord de tuyau colonnaire (31) ; et une épaisseur de paroi d'un côté de chaque pièce de paroi (33) proche du premier élément de raccordement (1) est supérieure à une épaisseur de paroi d'un côté éloigné du premier élément de raccordement (1).

5. Connecteur de raccord de tuyau selon l'une quelconque des revendications 1 à 2, dans lequel une extrémité du second raccord de tuyau colonnaire (31) proche du premier raccord de tuyau colonnaire (11) est pourvue d'un chanfrein annulaire (34) ; une extrémité du chanfrein annulaire (34) s'étend pour être reliée à une face d'extrémité du second raccord de tuyau colonnaire (31), et l'autre extrémité s'étend pour être reliée à la paroi interne du second raccord de tuyau colonnaire (31).

6. Connecteur de raccord de tuyau selon l'une quelconque des revendications 1 à 2, dans lequel le premier élément de raccordement (1) comprend des fentes annulaires (14) ; les fentes annulaires (14) sont formées sur la paroi externe du premier raccord de tuyau colonnaire (11) ; et l'élément d'étanchéité (2) est disposé dans les fentes annulaires (14).

7. Connecteur de raccord de tuyau selon l'une quelconque des revendications 1 à 2, dans lequel
le premier élément de raccordement (1) comprend en outre une fente de bord (15) ; la fente de bord (15) est formée dans un bord externe d'une partie d'extrémité du premier raccord de tuyau colonnaire (11) ;
le second élément de raccordement (3) comprend en outre un rebord (35) ; le rebord (35) est situé au milieu de la paroi interne du second raccord de tuyau colonnaire (31) ; et
le rebord (35) et la fente de bord (15) s'adaptent l'un à l'autre lorsque le premier raccord de tuyau colonnaire (11) est placé dans le second raccord de tuyau colonnaire (31).
